# EUROPEAN PATENT APPLICATION

(11) **EP 1 795 828 A1**
(43) Date of publication of application: **13.06.2007**
(21) Application number: 04727187.9
(22) Date of filing: 14.04.2004
(51) Int. Cl.: F24J 2/42, F03D 3/00

(54) **HELIO-WIND POWER PLANT**

(71) Applicant: CLOSED JOINT-STOCK COMPANY "MGK" "INTERGELIOECOGALAXY", Moscow, 107996 (RU)
(72) Inventor: CHABANOV, Alim Ivanovich, Alushta, 98517 (UA); SYCHEV, Michail Parfenovich, Minsk, 220002 (BY); EROCHOV, Nikolai Michailovich, Minsk, 220004 (BY); SCHUKIN, Georgii Lukich, Minsk, 220017 (BY); SIDORENKO, Jurii Petrovich, Minsk, 220071 (BY); KOROLEV, Vladislav Mihailovich, Moscow, 129327 (RU); CHABANOV, Vladislav Alimovich, Moscow, 119517 (RU); FILIPENKO, Evgenii Semenovich, Simferopol, 95000 (UA); BAZHENOV, Andrei Nikolaevich, Simferopol, 95000 (UA); SMARZH, Ivan Iljich, Simferopol, 95011 (UA); ANDRIANOV, Ivan Timofeevich, Simferopol, 950053 (UA); MARTYNOV, Vladimir Georgievich, Simferopol, 95000 (UA); ALTUHOV, Boris Ivanovich, Simferopol, 95000 (UA); GORODOV, Michail Ivanovich, Simferopol, 95034 (UA); MATASOV, Rev Alexandrovich, Cherkasy, 18024 (UA); ZHIGAJLO, Viktor Nikiforovich, Moscow, 117418 (RU); VORONKOV, Alexei Alexeevich, Moscow, 117042 (RU)
(74) Representative: Turini, Laura
(86) International application number: PCT/BY2004/000014
(87) International publication number: WO 2005/100877

(57) **Abstract**

The present invention concerns to sphere of helio-wind energy and is intended for creation powerful helio-wind power plants.

A Helio-wind power plant contains helio-transforming and wind-directing spaces, the thermodynamic and aerodynamic devices forming rotary-forward vortical trajectories of movement of energy-saturated airflows, wind turbine with the electrogenerating device which are connected among themselves by the contactless way, without application of traditional shaft as concentrators and transmitters of mechanical energy, and the air-outlet channel. Wind turbine is executed compound of base parts - the connected pairs concentric energy-differentiative bushes rotating around of the general axis on independent support between which blades from an easy air-tight material are fixed, for example, from flexible metal sheets and-or high-strength films, kept at efforts by bandage ropes. Energy-differentiative bushes are executed compound by means of constructive modules, in particular, from aluminium alloys, the titan or an easy composit material. Constructive modules are made on the equipment of the raised accuracy in conditions of machine-building shops, with giving of individual distinctive attributes by him according to technology of assembly which during installation works, in particular, visually, differ marks.

Wind turbine contains in the structure of two or more pairs energy-differentiative bushes forming together with blades separate energy-transforming channels. Each pair of energy-differentiative bushes can structurally be carried out as independent wind turbine, covering another with the general axis of rotation.

By means of sites of cases of energy-differentiative bushes, free from blades, the rotating magnetic systems creating electromotive force in motionless induction coils which are components concentrically placed electrogenerating sections are placed.

In a base variant of helio-wind power plant are applied two wind turbines or two pairs energy-differentiative bushes, internal from which is connected by an entrance cavity with helio-transforming space, and external, covering the first on perimeter, - with wind-directing space.

The helio-transforming space containing helio-absorbing surfaces, is executed by means of transparent thermal-insulation coverings and connected by air-inlet channels through auxiliary technological means to an input of wind turbine above which the motionless site of air chimney and a controlled superstructure to it is placed. The wind perceptive surface of a controlled superstructure is adjusted due to corresponding moving its separate sites, depending on speed of a wind.

The wind-directing space is created by means of extended in length and height of the transparent designs focused in radial directions from periphery of a complex to an axis of the channel.

Created helio-wind power plant under the technical and economic, consumer and ecological characteristics has advantages before thermal power station, the state district power station and the atomic power station and can effectively replace them.

## Description

### Technical Field

The invention concerns to the power installations using sources of renewed energy, mainly solar.

### Background art

The technical decision containing a collector of a solar energy, representing a chimney which surface is painted in black color, wind turbine, jointed with the generator, established in the bottom part of a chimney, and also a thermo-generating source - a afterburning furnace which is the reason of draught in a chimney because of exothermal process is known [see the patent of Russia 1828516 «Power installation», OZD 9/00, publ. 15.07.93].

The present technical decision allows to utilize heat of external heating of a chimney by solar rays and to use exothermal process of the thermo-generating equipment as which a afterburning furnace is applied, for creation of an air power flow through wind turbine by means of what the generator makes working-out of the electric power. However, in this case cost of the worked-out electric power is raised because of not complex use as well others accessible a component of a solar energy, in particular, a natural wind which can be effective stimulus natural draught, etc. Therefore the present installation cannot be considered as the prototype of highly effective power station, and allows to utilize only a part of inevitable heat-loses of the exothermal equipment, that in itself gives local economic result.

The technical decision containing a collector of a solar energy helio-transforming surfaces, which transfer thermal energy to the air environment contacting to them informed with the help of the air channel with an internal cavity of a chimney, wind turbine, established in a chimney and jointed with the generator, and a vertical blade rotor perceiving a wind power, and his each blade is executed as an aerostatic jacket with the independent air line placed inside it connected with an internal cavity of a chimney is known [see and. With. The USSR 1386737 «The wind-helio unit», 03 11/02, publ. 07.04.88].

The present technical decision allows to use simultaneously both a wind power, and energy of thermal transformation of solar rays, and the air, heated up in helio-transforming space, forms in an internal cavity of an chimney the wind-flow which is dismembered on parallel wind-energy channels during the passage through aerostatic jackets of blades on which the wind power and a part of energy airflow is summarized, remaining in it after passage of the last through wind turbine. Potential opportunities of use in this case principles of energy summation a direct solar thermal emission and a natural wind as forms of realizing of a solar energy, and also partitions of the general airflow in a chimney on parallel air-wind energy channels comprise prospect of substantial increase of efficiency helio-wind energy installations. However, constructive-technological realization of these principles in the present technical decision has a number of flaws, in particular, the convergent tubes widely known as concentrators of wind energy are not applied (see for example, certificate of authorship of USSR 1134771 "the Tower wind turbine", 03 3/04, publ. In 1985; the patent of Russia 2038511 " the Tower wind turbine", 03 3/04, .27.06.95), that technologically reduces efficiency of a blade rotor, is not used the thermo-accumulating and thermo-generating equipment in helio-transforming space, and design-technological performance of the last and a design of a blade rotor itself do not create an opportunity for construction economically effective helio energy instalations in accordance with present analogue.

The technical decision containing wind-wheel, the electrogenerator and thermoaccumulator, using reserve capacities of wind unit for heating water by electroheaters with an opportunity of steam production for a drive of in addition established steam turbine [see the patent of the USA 5384489 «Wind-electrical installation with system of accumulation of energy », 03 9/02 is known; 22 In 1/28, publ. In 1993].

The present technical decision allows to stabilize development of the electric power due to use thermoaccumulator, but does not allow to receive the big capacities for manufacture of the electric power and to reach high technical and economic parameters of the last because of limitation in use of others a component of a solar energy, and also because of the design features, not allowing to apply wind turbine (wind-wheel) on capacity, commensurable with capacities of turbogenerators. It is connected by that high-power wind turbines should have in similar designs rather large weight-size characteristics which cannot be placed in used designs at significant height for the technological reasons. Except for ' that, the effect of steam formation is not applied in the present technical decision to increase in windflow speed through the wind turbine and used by means of the steam turbine in which phase transition of water from a steam condition in a liquid condition is connected to the big thermal losses and decrease the efficiency of wind energy installation.

Other technical decisions in which the steam and the microparticles of the water which are were present in heated up air, are the major component of draught initiation of vertical windflow, including in a chimney which is carried out from a flexible elastic material on height of 1000 meters and more and rising by itself in vertical position due to application of the closed air tank with the light gas, kept for ropes with adjustable tension devices [see are known. Inventor and rationalizer # 1/89, . Malinin, «The tube is ready to fly up»; certificate of authorship of USSR 1449703 « Aerodynamic helioinstalation», 03 O7/02; 24] 2/42, publ. 11.86].

The present technical decision, as against previous, allow to use on an output of the chimney energy of phase transition water-steam in a drop liquid condition, and also microparticles of a moisture - in a condition of snowflakes and microparticles of ice, and due to corresponding increase of speed ascending airflow inside achimney his energy considerably increases. Use of this power components, alongside with simultaneous application of others a component of a solar energy of an environment, presumes to receive rather significant additive in working-out of the electric power with the help of helio-wind energy installations. Installation of several wind-turbines, classically jointed with electrogenerators is provided also. However, such technical decisions are limited to the features; in particular, use an ultrahigh chimney which reduces design-technological and engineering efficiency of it.

Scientific bases of corresponding use of energy of world ocean, stocks of a moisture of the bottom layers of an atmosphere and powerful power transformations due to phase transitions water steam, born in high layers of an atmosphere is artificial created by windwlow, in a water and ice-condition, as theoretical base of gravity-thermal (solar) power, are developed in 80-s' years of the last century by the Soviet scientists [see, for example, the book "Tornado", V.V.Kushin, ., «Energoatomizdat», 1993] which have proved high potential efficiency of such power. A condition of its realization is development of practically feasible scientific-engineering and design-technological decisions.

In searches of ways of practical realization helio-wind energy installations of the raised capacity such technical decisions in which the converter of energy of an air stream is represented by coupled with the help of a reducer or vertically located the friend above the friend wind-turbines, supplied, through independent reducers, at least, to two electrogenerating installations, with identical or various angular speeds are developed also. [see the Patent of Russia 2000467, 03 1/02, publ. In 1993 .; the patent of the USA 4074951, 03 3/4 publ. In 1978; certificate of authorship of USSR 1078120, 03 1/00 publ. In 1984].

The present technical decisions allow to carry out selection and transformation of energy of an air stream in conditions of his increased cross section and the raised capacity. However, such technical decisions lead to bulkiness of designs, decrease its reliability and efficiency of energy-power installation. Therefore the present way of distribution in space wind energy and electrogenerating installations with the purpose of having of an opportunity to escalate the capacity of helio-wind electric power plants is not competitive in comparison with electro-energy converters of existing thermal power stations and the atomic power station.

The analysis of the above-stated technical decisions, and also others, known to authors from the patent and scientific and technical information, shows, that complex use of their useful attributes and technical features, however, in the new constructive-technological decisions, added with application of some other principles energy-helio transforming, could raise efficiency of use of a solar energy essentially. Most close to the prospective invention is the technical decision including a helio-transforming - helio-absorbent surface, a transparent insulating covering, space between a helio-absorbent surface and a transparent covering - the helio-transforming space connected by the air channel with an internal space of chimney through wind turbine, mounted in the case of chimney and connected with the electrogenerating device, wind inlet space and the thermoaccumulator [see certificate of authorship of USSR 1625999 «The Solar engine», 03 About 6/00, 24] 2/42, publ. 07.02.91].

The present technical decision allows to use more effectively rays and wind components of a solar energy of surrounding space during working out of the electric power due to their overlapping in interrelation with thermoaccumulator, results of it's application raise during the usage of the optimizing computer control center.

However, it also does not provide deciding technical and economic parameters helio-wind power stations which could make their preferable before traditional thermal power stations, a state district power station and the atomic power station. It is connected to a number of restrictions and lacks also the present technical decision. In particular, in it above mentioned such useful factors of helio-energy transformations, as application the wind directing space structurally coordinated to use of helio-transforming space, application useful energy-transforming are not used due to phase transitions of water on direct and return chains water - steam - water - ice, with use of thermal energy of world ocean, and others without that a complex application of efficiency of helio energy transformations is considerably reduced. Besides in the present technical decision constructive-technological features reduce efficiency and scale energy transformation, including due to application of known classical designs of wind turbine and the electrogenerator as the electrogenerating device, connected among themselves by means of shaft as concentrators and transmitters of mechanical energy. For powerful helio energy complexes this method practically cannot be realized. In accordance with this fact helio energy complexes with use of the present technical decision, despite of the most complex combination in it of some useful attributes concerning others known, have not had application.

Problem of the present technical decision, according to the prospective invention, is creation, in conditions of engineering practice and technical and economic competition, a powerful helio-wind power plant with stable manufacture commodity electric and thermal energy in any regions of a planet, including northern regions, in zones of large sources of nonfreezing water, on the basis of addition of the specified prototype [certificate of authorship of USSR 1625999 "The Solar engine", 03 About 6/00, 24] 2/42, publ. 07.02.91] other known and easily accessible components of solar energy with their economically effective constructive-technological complex coordination, including creation of essentially new designs of the wind turbine and electrogenerating devices distributed in space on all section specially organized energy-saturated airflow.

Technical result of the present prospective invention is creation such helio-wind power plant, which allows getting cheap, non-polluting, in regular intervals working-out to consumers energy in any regions and is provided with economic and ecological advantage above traditional power complexes.

Particular technical results of the offered technical decision are system, technologically integral improvement of an environment, high-efficiency manufacture of non-polluting food stuffs with rather low cost price, including valuable various production use of constructive modules and the new technologies used for high-efficiency assembly of building and power installations of helio-wind power plant, for high-efficiency construction of habitation of the raised comfort and ecological compatibility, modernization of the way of a rural life and the agrarian and industrial complex, combined with producing of energy, creation of conditions for possible purposeful improvement of a climate in separate regions and on a planet as a whole is artificial the created reservoirs intended for maintenance highly economical energy producing.

### Disclosure of invention

The specified technical result in the process of realization of the invention is reached by that, in view of positive features of other known technical decisions and their constructive performance, proceeding from the named prototype, helio-wind power plant containing helio-transforming space, formed helio-absorbent surfaces and their transparent and the thermo insulating coverings, including territories of the agrarian, trade and industrial purpose, the closed air environment heated up with a transformed solar energy with air-inlet and air-outlet systems and special technological means, including thermo accumulating, thermo generating and evaporating installations and constructions, thermodynamic and aerodynamic devices and adaptations for formation directed energy-saturated airflows, a chimney with controlled superstructure of adjustable height and-or its form wind-loaded surfaces as aerodynamic means of increase of draught in it during the lowered speed of a natural wind and protective means to increasing speed in the last to level higher 12-15 m/s., the air-directing space including focused in environment air-directing surfaces, fixed concerning system set of bearing supports and applied as components of concentrators of a natural wind, in a direction from formed by them peripheral wind-inlet apertures to the chimney, connected to an internal cavity of last by means of the wind-directing channel in parallel the outlet channel of energy-saturated airflows of helio-transforming space, additional aerodynamic means by means of which both specified wind-air channels are connected to a chimney through independent wind turbines, combined with electrogenerating devices, and the control computer center, has differences that wind turbine which entrance cavity is aerodynamically connected with wind-directing space, concentrically covers wind turbine, which entrance cavity is aerodynamically connected with helio-transforming space in such a manner that it is constructive they in common represent one distributed in space wind turbine, consisting of concentric sections which has, at least, two various entrance channels of energy-saturated airflows, thus each of structurally incorporated wind turbines is made by means of, at least, two adjacent concentric energy-differentiative bushes established on independent bearings, and located between them aerodynamic blades which in common form one of air energy-transforming channels of wind turbine, and by means of free surfaces from blades energy-differentiative bushes are fixed the magnetic activators of the electrogenerating devices, connected through magnetic air backlashes with electrogenerating sections coils and their magnetic conductors, fixed on base in suitable auxiliary working space which are created as concentric designs near to air energy-transforming channels and are isolated from energy-saturated airflows, thus cases of energy-differentiative bushes are executed from the facilitated designs, for example compound, mainly cylindrical form, and on them external surfaces strengthening bandage ropes, and aerodynamic blades of the wind turbine, located between adjacent energy-differentiative bushes are fixed with a prestressing, fixed to the last from both parties by means of technological demountable connections of the wind turbine, containing, for example, fixing grooves for accommodation on sliding landing the vertical face terminations of aerodynamic blades which mechanically connect the last with cases of energy-differentiative bushes and strengthening bandage ropes by means of multipurpose fixing, in particular, the screw connections executed with the help of technological apertures, formed by software in cases of energy-differentiative bushes, and containing adaptations for accommodation and fastenings in them of bandage ropes, and multipurpose fixing connections and technological apertures in cases of energy-differentiative bushes are placed along spatial curves concerning which compound sites of design set structures of aerodynamic blades are fixed, thus the last on width of the horizontal section are fixed on the part of an entrance cavity of the air energy-transforming channel by means of the high-strength horizontal face terminations, in particular, with the help of the aerodynamic beams located between cases of energy-differentiative bushes in radial directions in structure of a air-inlet flange, internal and external which ring surfaces in case of the raised capacity of wind turbines are fixed concerning rotating components of independent bearing of rotation, thus on the fixed distance from the horizontal face terminations of aerodynamic blades from below is placed motionless the air-directing device, applied as one of the named additional aerodynamic means and containing air-directind surfaces as surfaces motionless rigid blades which spatial structure and a structure of aerodynamic blades the air energy-transforming channel form among themselves design set corner of attack of an entering high-speed air stream on the last, thus internal and external ring surfaces a air-inlet flange contain ring clamps which enter on free landing into ring propoints in the motionless concentric ends of the air-directing devices, forming internal and external its borders of an jet output, in common applied in quality it is constructive - technological means of isolation energy-saturated airflows from corresponding auxiliary working space and the surrounding air environment, thus on the part of a target cavity of each of wind turbines including air energy-transforming channels, the top ends of aerodynamic blades are executed under the corners close on size and equally directed in their corresponding phase positions, thus the chimney with the help of additional aerodynamic means is applied as the integrator fulfilled in the wind turbines of airflows and auxiliary windflows various power characteristics with the synchronized entrance channels, and inside it sensors of speed, temperatures and humidity integrated rotary-vortical airflow, connected to the control computer center are placed on the fixed coordinates, and each auxiliary working space is supplied protective, in particular conic, surfaces with the general vertical axis, apertures between which are closed by ring platforms to which technological passes with aerodynamic surfaces are executed, and the specified ring platforms contain observation ports and adaptations for accommodation is repair - preventive means and entrance apertures in auxiliary working spaces.

Such technical decision allows to overcome economically effectively power restrictions in the process of creation a helio-wind power plants. That the last could compete successfully to thermal power station and the atomic power station, they should be created, at rather close specific capital investments, on significant capacities in unit, in conditions of use is relative low-potential energy of a air-windenergy flow, than it is typical of cases of application high-thermocreating power raw material and a high-potential power contour with use of a high pressure superheated pair. In this case, at known standard decisions, the sizes of windturbogenerator can be rather significant, essentially exceeding the sizes of steamturbogenerators similar capacity.

Thus efficiency of transformation of capacity a air-windenergy flow in electric capacity will be considerably higher if, in view of application of thermodynamic and aerodynamic means of power saturation formed airflows, the wind turbine settles down above a surface of the ground higher than mouths of helio-transforming space which for creation of capacity in tens and hundred thousand in kWt should have large enough geometrical sizes, including height. At the same time the arrangement at height powerful wind turbine, having on a design the approached analogy to the water-wheel, is technically extremely a challenge. Therefore also known searches of effective distribution (in the space of a wind-energy flow) capacities of the wind turbine and the electrogenerator combined with it are conducted, on what specify the above-stated known technical decisions.

The sanction of this problem by creation new, collected of compound base parts, designs of the wind turbine, consisting of the easy concentric bushes named energy-differentiative which dissect-differentiate a wind-energy flow on parallel channels where settle down directly at installation in a place of operation of the turbine mortgage blades from an easy air-tight material, provides a real opportunity of development and construction powerful helio-wind power plants. Thus each of energy-differentiative bushes is fixed in space by means of independent bearing of rotation which can settle down only on the bottom part of their cases or only on top, or on both face ends vertically located energy-differentiative bushes, and also in a place of accommodation electrogenerating coils and their magnetic conductors.

The wind turbine, consisting of concentric energy-differentiative bushes, does not contain a uniform shaft as the constructive unit used in traditional technical decisions, and its this major feature allows to provide on various radial distances from the general axis of rotation various angular speeds of rotation, but relatives on size linear speeds of movement of their surfaces, thus power delivering of mechanical capacity and its transformation to electric capacity is carried out distributed on section of wind-energy airflow. These design features which have been taken together, allow to raise considerably efficiency as the wind turbine itself and distributed in space electrogenerating devices, and the general efficiency of total transformation a component of a solar energy in electric energy. At such design of wind turbine any settlement aerodynamic forms can be given to its blades, and their height can be set such size which finally will define internal resistance of a wind turbine and a level of power delivering of capacity of the wind-energy flow.

Practically to carry out installation of a wind turbines in diameter up to 50-100 m., the energy-differentiative bushes are carried out from small and easy compound modules which are software made completely at the specialized enterprises with corresponding marks of each module, according to the developed technology of installation. Essentially as, from the software made modules, surfaces of sliding of independent bearing of rotation gather. Bearings of rotation are fixed by the motionless part concerning bearing designs of wind turbine by means of ring platforms which also are carried out compound of light constructive modules, and these platforms can have only approached ring form, representing, for example, an equipotential polygon.

Motionless constructive elements of bearings of rotation, together with a constructive-technological infrastructure of submission of a lubricant, settle down on the mentioned ring platforms, as on base.

The modular design of cases of energy-differentiative bushes is in addition fixed and prestressed with the help of the bandage ropes located on all height of their external surfaces, made, in particular, from polymeric, coal from polymeric, coal, ceramic or other high-strength materials and strings. Can be applied as well steel ropes that is defined by design decisions.

Accommodation of blades of compound wind-turbine between surfaces of each pair of the energy-differentiative bushes forming among themselves the independent air energy-transforming channel is carried out after field assembly of energy-differentiative bushes and their independent bearings of rotation on a design place of operation. The design of compound wind turbine provides multi-variant approach of performance and fastening of blades, however the general for all variants is the following. Each blade is made by such parts of a light air-tight material, which assemblers manually easily lift and place between energy-differentiative bushes. These parts, for example, can be carried out from the light composit polymeric material covered at necessities a film of small thickness, with the form corresponding to the settlement form of certain sites of cross-section sections of blades, and the length corresponding to distance on a spatial curve between surfaces of energy-differentiative bushes, forming the independent air energy-transforming channel. In that case marked components of blades executed in conditions of factory manufacturing, are joined among themselves on horizontal surfaces, than consecutive formation is provided at assembly of the set aerodynamic structure of blades. The face ends of components of blades of wind turbine are fixed concerning corresponding surfaces of energy-differentiative bushes by means of technological fixing connections which include, in particular, the directing grooves made of separate sites and fixed concerning compound modules of cases of energy-differentiative bushes. Blades of the set volumetric form can be made also of separate strips a sheet material, jointing among themselves and surfaces fixed rather energy-differentiative bushes during the process of installation.

Between the air energy-transforming channels formed in the wind turbine corresponding by surfaces of energy-differentiative bushes in whom blades rotating together with them are placed, are created by other surfaces of these bushes the auxiliary air-wind insulated working spaces closed on the part of an entrance cavity of the wind turbine and on the part of a cavity of a chimney by ring platforms. Through these platforms, with condensation, and through wind insulated spaces of the wind turbine pass basic constructions for accommodation of the process equipment of various purpose outside of wind energy channels and above the wind turbine, in a chimney, including the top bearing ring platforms are fixed.

Creation of wind insulated spaces inside the wind turbine (insulated from axial energy airflofw) does not reduce its technical and economic parameters. On the contrary, it leads to increasing the speed of airflow in air energy-transforming channels that allows to raise accordingly designed speeds of rotation energy-differentiative bushes, and it allows to lower the unit charge of active materials in the electrogenerating device. The last in this case will consist of lines concentric electrogenerating sections, in which the mobile energy-transforming elements executed, for example, as constant magnets or electromagnetic systems, are fixed concerning sites of surfaces of energy-differentiative bushes, free from blades. Motionless elements of electrogenerating sections, executed, for example, as electric coils and magnetic conductors, are fixed concerning ring platforms, to in parallel constructive elements of independent bearing of rotation. For maintenance of more convenient service certificate of authorship sections with an electroswitching infrastructure and independent bearing of rotation their compound constructive elements are shifted from each other on a level along an axis of wind turbine. The energy-transforming electrogenerating sections are fixed concerning base, settle down mainly in auxiliary working spaces.

Single electrogenerating sections can be carried out not on an electroinduction principle, and by a principle of electrostatic machines.

The electrogenerating sections, using a principle of an electromagnetic induction, in the offered design of the wind turbine and electrogenerating devices, contain groups of electric coils in which pressure of the raised frequency are shifted on a phase and form the multiphase system, allowing the cheapest means to form industrial three-phase system with the set frequency. For these purposes the electrogenerating device is connected to the semi-conductor converter by means of which electric coils on power channels are connected to a distribution main. Last includes a feeder, connected with external electric mains, and the electrolines providing auxiliary of a helio-wind power plant. The computer control center of the last with the help of control channels is connected with electrogenerating sections, providing modes of synchronization of separate groups of electric coils and as a whole electrogenerating device to consuming electric system.

The offered design of the wind turbine, in connection with small-module configuration and features of its assembly directly on a place of design technological accommodation, creates the whole spectrum of possible variants of realization, excellent from each other and having specific advantages to cases, for example, big or smaller diameters of energy-differentiative bushes, for those or other technologies and conditions of factories-manufacturers.

In this connection other important features of the offered technical decision, as against the above-named prototype, will be, that cases of energy-differentiative bushes are executed with application of light metal cylinders which external surfaces are supplied with the strengthening bandage ropes attached to strengthening adaptations of aerodynamic blades, established and fixed between energy-differentiative bushes in collapsible designs, with the help of multipurpose fixing connections of the wind turbine, and the last are placed by means of the software technological apertures executed in metal cylinders located along lines of crossing of their surfaces with surfaces of aerodynamic blades, and fix their interposition in gathering and under loading.

Difference at certain diameters of distributed sections of the wind turbine will consist and that, at least, a part of cases of energy-differentiative bushes are executed in a modular design with application of the marked assembly modules of a vertical arrangement which completely make the corresponding case of energy-differentiative bushe, and they are combined adjacent software by the processed surfaces, placed by the bottom and top ends, for example, in face fixing adaptations of energy-differentiative bushes and are fixed by means of strengthening bandage ropes and mortgage products, for example, metal plates and-or the ropes attached to the specified fixing adaptations, and multipurpose fixing connections of the wind turbine in single, prestressing design, thus the horizontal face ends of energy-differentiative bushes, at least bottom of them, contain ring horizontal shelfs with surfaces of sliding and cylindrical vertical surfaces of sliding, by means of which as elements of independent bearings of rotation, the energy-differentiative bushes are connected to the help of a lubricant and-or basic bearing pillows, in particular magnetic, with elements of independent support of the rotation, the fixed in horizontal and vertical plane.

Difference will consist also that aerodynamic blades of wind turbines are executed compounded, in particular, volumetric, in the hollow and-or facilitated designs, and parts making them in common form a full structure of each of the aerodynamic blades, certain by their designed external surfaces, are joined among themselves by adjacent surfaces and are fixed by means of the radial ropes strengthening, mainly, placed outside and-or inside in power contact to constructional materials of aerodynamic blades, thus all ropes placed on their external surfaces, are located in the flutes executed on them, and radial ropes are attached by both ends by means of multipurpose fixing connections of the wind turbine to bandage ropes and mortgage products in cases of the energy-differentiative bushes, fixed regard to independent bearing of rotation.

Difference and that aerodynamic blades of wind turbine are executed by means of openwork volumetric designs on which the air-tight high-strength material is fixed, for example glass-film, thus the specified openwork designs contain metal and-or composit bearing elements, in particular, black-reinforced plastic.

Difference and that aerodynamic blades of the turbine are executed compound of a sheet material.

Difference and that on surfaces of blades the field aerodynamic is executed, for example hemispherical, deepenings, the sizes and which forms are defined by power parameters of the wind turbine.

Difference and that as compound constructive modules of cases of energy-differentiative bushes the marked vertically located racks from a composit material are applied, inside each of which strengthening mortgage products, for example, composit a tree-metal beams are placed.

Difference and that as compound constructive modules of cases of energy-differentiative bushes are applied is marked the horizontal located rings and-or their share parts executed, for example, from composit materials, joined among themselves on vertical and horizontal adjacent surfaces and fixed in the general design by means of the multipurpose fixing connections strengthening of bandage ropes and power elements, located in the apertures executed in these modules by software.

Difference will consist also that as components of cases of energy-differentiative bushes the marked modules executed in openwork designs are applied, covered with an air-tight material, and in them constructive elements for fastening the multipurpose fixing connections strengthening of bandage ropes and vertical mortgage products of cases mechanically connected to face fixing adaptations of energy-differentiative bushes are placed.

Difference will consist also that the specified multipurpose fixing connections contain constructive elements with sites of spherical surfaces and open assembly apertures for fastening the radial and bandage strengthening ropes located on bearing designs of aerodynamic blades and surfaces of cases of energy-differentiative bushes.

Difference will consist also that wind turbines independent sensors of worked-out energy which through the control computer center are connected to regulators of the air-wind inlet and wind-outlet systems parameters contain, the special process equipment of power purpose and a controlled superstructure above a chimney.

The offered additional complex of technical decisions is directed on perfection of a wind turbine's design, simplification and increase of productivity of its installation with simultaneous increase of its durability and rigidity. Besides development of an infrastructure of rendering and pipe-bending power airflows, including auxiliary aerodynamic means and working spaces is carried out.

Vertically located racks from a composit material as assembly units - modules of cases of energy-differentiative bushes can be carried out by rather light and strong, amplified mortgage metal structures and ropes, in particular, easy and strong polymeric ropes by means of which these modules are mechanically strongly fixed concerning surfaces of sliding of independent bearings of rotation. The easy modular sites of blades covered with an air-tight material, can have beforehand realized settlement structure with corresponding marks. The sheet material forming surfaces of blades during installation, can represent itself steel sheets, sheets from a composit material, and elastic films and also to cover surfaces of the elements received by pasting or on manufacturing techniques of foamy, composit materials. Aerodynamic blades can be made also of polymeric materials or the materials received with application of coal, ceramic, kapron and other strings, connected with film or other air-tight material. The flexible sheet material even without his preliminary profiling, can easily get a designed aerodynamic structure of blades during their installation when end faces of sheets move ahead on profilemaking to the grooves created on surfaces of energy-differentiative bushes. However, application of modular designs of blades and their installation-dismantle by means of demountable connections is basic. It resolves a complex most challenges of practical realization of high-power turbines. The above-stated technological multipurpose fixing connections play a role of the important link in the offered design of the wind turbine. To them strengthening radial bandage ropes, available on surfaces of blades and fixing their aerodynamic structure in conditions of application light and even a flexible air-tight material of blades, on the one hand, are fixed at action on them of rather high power loadings from moving aifflow, and on the other hand, the bandage ropes strengthening external surfaces of energy-differentiative bushes which cases are made of modular light modules, in conditions of action on them of rather significant centrifugal forces. Simultaneously with it to multipurpose fixing. For example, by screw connections the mortgage products located inside assembly constructive modules of energy-differentiative bushes are mechanically fixed. Thus, multipurpose screw connections fasten among themselves flexible and easy strong multicoordinate the rope systems providing due to their prestressing resulting durability and stability of the wind turbine in conditions of combined influence on it of axial, radial and tangential forces.

With the purpose of high-efficiency and reliable fastening bandage ropes after installation of blades, the ends the multipurpose fixing (screw) connections, inverted aside blades, contain constructive elements with spherical surfaces and free apertures, for example, in the form of rope-holding hooks. In this case the free end of a bandage rope, putting on an aerodynamic surface of the blade, it is free fastening for a hook, then - behind a adjacent located hook of the adjacent located screw connections and turns in the opposite direction along a surface of the blade. On a surface of the second bush similar return turn of a bandage rope is done, and it in a parallel number settles down again on a surface of the blade. Thus, the radial bandage rope for a lot of straight lines and reverse motions covers a complex spatial structure of the blade with the required density and, at last, his free end is fixed.

The ends of the multipurpose screw connections, inverted aside blades, can be made out and as other designs, for example, with use of a hollow cylindrical insert with an intense elastic element. Thus the cylindrical hollow insert contains on the surface a spherical flute for location and holding of a rope with partial or his full round around of the specified insert. The elastic element in this case is intended for compensation of possible lengthening parts of bandage ropes while in service, and also serves as the indicator of a condition of bandage ropes at checkups.

The ends of multipurpose screw connections of the wind turbine, leaving of cases of energy-differentiative bushes on the part of them banding surfaces, contain constructive elements for maintenance of passage of bandage ropes through case details of connections, for folded their deepenings concerning a surface of energy-differentiative bushes by means of prestressed elastic element - with the purpose of similar indemnification of deformation of bandage ropes while in service, and also visual indication of a condition of bandage ropes at checkups.

Multipurpose fixing (screw) connections of the wind turbine are also means of fastening of plates, for example, steel by means of which profile grooves for fixation of face sites of blades can be formed. Such profile grooves are formed by short sites at a stage of manufacturing of the marked compound constructive modules of cases of energy-differentiative bushes, in particular, with the help of metal structures, according to a designed integrated aerodynamic structure of blades and technological programs on manufacturing of each of the marked modules.

Variants of additional design features of manufacturing energy-differentiative bushes and blades and the used materials, stated above, in explanations do not require. They provide opportunities for increase of technical and economic parameters of the wind turbine with reference to the various overall dimensions of its components corresponding to various diameters of energy-differentiative bushes in structure of the turbine.

Realizing of blades with a volumetric structure on similarity of cross-section of a wing of the plane is directed on increase of resulting efficiency of transformation of energy of an airflow to electric energy and concerns first of all to energy-transforming channels with big diameters of energy-differentiative bushes. Thus air-inlet surfaces of blades are carried out with the raised factor of friction concerning a moving airflow.

For increase of efficiency and competitiveness a helio-wind power plant the great value has an effective utilization of a wind power: natural ground-layer and artificial created variants of the wind. For this purpose the technical decision connected to application of air-concentrating convergent tubes which are known in practice of local concentration of a natural wind can be used. The question of efficiency of use of such method in this case consists in an opportunity of development of such design helio-transforming spaces and such realizing of the convergent tubes of air-directing spaces that they naturally supplemented each other and mutually expanded technological opportunities, and also were structurally combined. Their power airflows pass through independent wind turbines and summarize in a chimney. Last, together with a high-altitude controlled superstructure, carries out functions of the integrator of airflow both spaces that provides escalating quantity of the working-out of electric power. Rotating airflows, leaving from both turbines, have among themselves coordinated parameters of a direction and speed of rotation, and in a chimney their vortical components should amplify, that promotes increase in resulting efficiency.

However, their design coordination will be provided not always with self-regulation, due to design chosen corners of an inclination (in the spatial form) blades on an output from air energy-transforming channels in different diameters. Therefore it is necessary to operate parity of the current loadings of both wind turbines, guaranteeing working out of the electric power of necessary capacity during each present moment of time due to change of height of rise or the area air-loaded surfaces of a controlled superstructure to a chimney, and also due to control the intensity of a turbulence (generation of capacity of a turbulence in the pipe), for example, by injection of microparticles of the water and heated up steam-air mixture in its various coordinates, on the basis of processing by the control computer center of the data on a vector of speed of airflow, temperature and humidity in various (design) points of an internal cavity of chimney. Creation of nonequilibrium conditions of temperature and humidity of airflow in the certain areas of a chimney forms, in interaction with draft from the surrounding atmosphere, the amplified, integrated processes of draft with vortex formation. Processes of vortex formation and mechanisms of their realization are created and in outlet channels of high-speed airflows from both - helio-transformind and air-directing - spaces, by means of auxiliary aerodynamic means and adaptations. For example, before ring jet outputs of both these channels are placed air-directing devices with inclined blades, finally twisting the airflows, and before them - conic screw surfaces with leading to them hot an steam - air mixture, and also aerodynamic means at the previous stages of preparation air - windflows are applied.

Observance of spatial design-technological proportions of a complex with capacity and dimensions wind turbine, designing the helio-transforming space concluding inside ground and near-ground helio-absorbent and thermo-generating surfaces, and executed as extended in length and height independent sections, has allowed to create wind-concentrating convergent tubes unusual designs and the sizes, which air-directing surfaces, are mainly received in the process of creation helio-transforming thermo-generating spaces. The additional wind-directing surface of such wind-concentrating convergent tubes is created due to the device of a transparent ceiling which design has many variants. In addition to this, except for function of concentration of energy of a ground natural wind, in wind-directing space with such ceiling is possible a realization of lines the exothermal processes not peculiar to helio-transforming space, with the process of usage of thermogeneration for increase concentration of the power of moving concentrated natural windflow and airflow.

For example, it is exothermal process of water freezing during the winter periods, especially sea water in Northern and East regions of Russia, with subsequent use of ice with the purpose of reception of fresh water for needs own power-production which requirements are rather significant also which contains in structure of energy-complex in artificial fresh reservoirs, and also with the purpose of use of ice in the ecological large-scale purposes and as commodity product. Processing remaining of the brine of a sea water in valuable products of high consumer cost, also causes additional profit. Power a component of phase transition of sea water in ice exceeds value of 70 kcal/kg. In a helio-wind power plant with electric capacity 20-100 thousands kWt can be carried out the freezing within several months of the winter period from one up to several millions sq. meters of water, with use thus gratuitous energy of world ocean by means of various technological processes. In particular, saturation by microparticles of fresh water of a power airflow in the further work cycle gives large increase in draft in a chimney in a cold season. Besides ice and cold sea water (including on equator) allow to create modes of formation of an artificial wind in the summertime, acting in wind-directing space on covered (or underground) wind-channel, irrespective of a natural wind and in addition to it. The artificial wind can be created with the help of water-air heat exchangers, constructions in which an airflow, passing a self-current through the air-inlet aperture, is cooled by cold water or thawing ice and gets the accelerated movement downwards, in the technological channel, and then on a site of rise is heated up by thermogenerator, for example, by solar rays, water from thermo-accumulators, getting the additional accelerated movement in air-directing space, to an entrance cavity of wind turbine. An air stream, forming artificial wind, can contact to water as a cooler or the heat-carrier by means of waterpipes or directly falling jets of water. The input of energy flow of air in wind turbine is carried out by means of special aerodynamic means in which additional power saturation of flows is made, and also is given and amplifies rotary a component of their high-speed movements, the corner of their attack is set to a air-air recieving surface of aerodynamic blades.

Considering, that the basic attendants of a helio-wind power plant is in helio-transforming space, and also that in the last vegetable and berry-fruit plantations are placed, in it comfortable temperature conditions and cleanliness of air are provided. Therefore some more exothermal processes, for example, the various products connected to hot conservation, drying and smoking fish, processing of seaweed, recycling of various waste products places in the wind-directing space or incorporates to it corresponding ventilating systems, near-ground surfaces of the industrial premises created for these purposes. Such helio-wind power plant allows to use the most various crafts as additional exothermal sources of heat, and also sources of additional self-support of energy complex.

The important feature of the offered technical decision is maintenance of helio-wind power plant stability at gale-force winds, till the speeds 50-70 m/s.

Basis of stability of all design is a rather powerful aseismic stable skeleton of helio-transforming and wind-directing spaces and a bearing skeleton on which the wind turbine and the chimney, base bearings and system especially strong rope extensions is mounted. It is carried out by means of compound bearings and columns from light composit modules and materials, with the strengthening mortgage products, made serially on the specialized technological lines and possessing high durability and stability in designs. Assembly of bearigs and columns of a bearing skeleton from the marked modules is carried out on high-mobile and the high-efficiency special process equipment and consequently in a result they have low cost in comparison with modern building technologies and designs in industrial and housing construction. Additional stability of basic designs is provided with their fastening on periphery of a complex to base by means of elastic intense elements, with a wind-reflecting bias, with the help of rope bearing grid. On them are fixed hurricane-protective constructions and accessories. Application of ropes from polymeric, coal, glass or ceramic strings is preferable. At correct use of durability and ease intense rope designs, with their certain rather important elasticity, the base skeleton of a helio-wind power plant appears as a whole essentially more strongly traditional industrial metal and ferro-concrete designs.

The helio-wind power plant, according to the invention, contains as artificial reservoirs of fresh water with a transparent insulating covering as powerful thermo-accumulators, and open reservoirs of fresh or sea water. Stocks of water in such reservoirs in total 5-10 mill.sq.m for helio-wind power plants capacity 100 thousands kWt are insignificant in comparison with the reservoirs formed at creation of hydroelectric power stations counting upon unit of their capacity, thus in the suggested technological decision the ecological damage is not caused to natural resources. In opened artificial reservoirs it is useful thermal energy reserved in a body of a planet (through the bottom) is used during the winter period also.

The areas of a surface of the ground, located under helio-absorbent, ray-reflecting and wind-reflecting surfaces, can be used for effective economic activities. In particular, accommodation on perimeter of a helio-wind power plant a cattle-breeding and poultry-farming farms to which will be accessible almost free-of-charge thermal and electric energy is especially effective, and their ventilating and faecal waste products will be practically utilized on a place, as well as waste products of fish-products, with reception of rather valuable by-products and thermal energy. In such technological scheme the lowest cost price of food stuffs is guaranteed essentially. The last have training also preliminary temperature preparation or hot processing in wind-directing spaces. At the device of freezing chambers for storage of stocks of food stuffs, before their realization, thermal components of processes freeze-making also are utilized on a place, that positively influences the cost price of production.

Modes of teamwork partitioned heliotransforming and winddirecting spaces, in view of carrying out of repair work, demand computer control and corresponding controls, including air-tight latches. Besides is necessary the balance usage of potential power capacities of both spaces which, in particular, can be carried out combined on designs, with preservation and a combination of their technological features. Therefore control of parameters of the worked-out electric power in both windturbogenerators that with help of latches to make optimization of distribution of loadings between both spaces is necessary. Besides for economy of their capacities (power stocks), the great value has control of modes of airflow in a chimney and a superstructure of it. On these modes basic influence render presence of a steam and microparticles of moisture in the airflow, optimization of processes of rotary vortical movements of the last. For these purposes use of sensors of vector high-speed movement of air on various sites of a chimney, his temperature and humidity is provided.

The helio-wind power plant is energy-producing, technologically and economically balanced system providing manufacture cheapest electric and thermal energy, the cheapest food stuffs at the most highly productive use of a surface of the ground and at simultaneous system revival of ecology of an environment.

Basis of such efficiency offered a helio-wind power plant is joint and balanced, with the organized dynamic interaction, all the component of the solar energy, shown in an environment, and also additional purposeful use in economic aims of each technological site of the plant located in his territory before the wind-turbo-electric unit.

In the presented example of realization of a helio-wind power plant, according to the invention, the central attention is given to design-technological features of the wind-turbine and electrogenerating devices because creation of the effective and practically feasible block "the wind-turbine - the electrogenerator" for powerful helio-wind power plants is till now the main question of their realization. Only after the decision of this problem there are considerably more actual other rather important features of creation powerful helio-wind power plant as the basic parts of new, non-polluting power. On illustrations independent sections-channels of the wind turbine are submitted, however there is use identical sections, at least, two wind turbines.

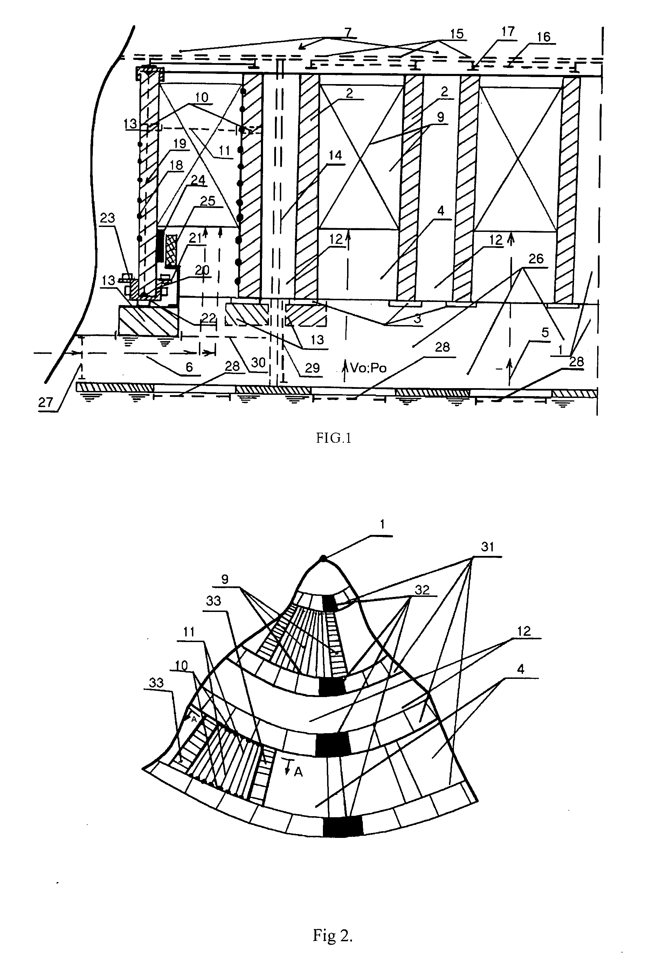

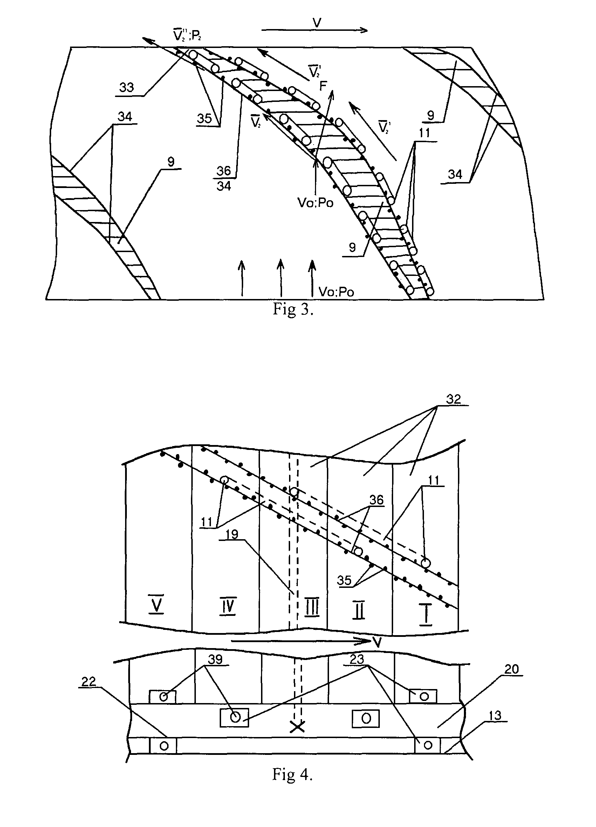

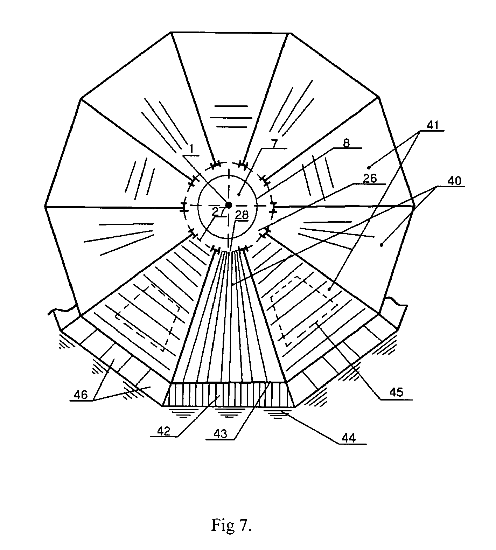

Around of an axis 1 of the wind-turbine (Fig. 1) concentrically cylindrical cases of 2 base components of the wind-turbine (or two wind-turbines at one level, in one section) - of energy-differentiative bushes which are placed on the independent bearing 3 submitted conditionally are placed. Between corresponding adjacent surfaces of cases 2 of energy-differentiative bushes are formed air energytransforming - windenergy channels 4 on whom the flows connected in a cavity 7 of chimney 8 (fig. 7) are dissected thermo-air 5 and wind, and according to flows 5 and identical channels 4 in such special design would concern or to wind turbine concentrated a essential wind, or to wind turbine a high-dynamic thermo-air flow from heliotransforming spaces. In air of airtransforming channels 4 blades 9 of the wind turbine which are fixed in a collapsible design on sliding landing, concerning corresponding cases 2 of energy-differentiative bushes by means of directing grooves multipurpose screw connections 10 of the wind-turbine and strengthening radial ropes 11 (on Figs 1 they are shown relative by a dotted line, on Figs. 3-6 - are more detailed), blades covering an aerodynamic structure on mainly radial parallel trajectories. In an interval between channels 4 by means of other pairs surfaces of cases 2 of energy-differentiative bushes auxiliary working spaces 12 of the wind-turbine,air-windinsulated with the help of motionless ring platforms 13 on which motionless elements of independent bearing of rotation 3 are fixed are formed. Through wind insulated working spaces 12 of the wind-turbine pass basic designs 14 for fastening the equipment placed outside of windenergy channels and above the wind-turbine, including the ring platforms 15 located above the wind-turbine to in parallel bottom ring platforms of 13 (more powerful). Bearing designs 14 pass through ring platforms 13, 15, as their bearing designs, with condensation from free parallel promotion air 5 and wind 6 flows. To the top ring platforms 15 are fixed adjustable deflectors 16 and condensing devices 17. In this case it is provided, that adjustable deflectors 16 are executed from the flexible goffered air-tight material fixed on sliding landing concerning ring platforms, and cope electric drives so that wind-airflow freely passed through apertures between ring platforms 13, 15 and air energytransforming channels 4, rotating blades 9 of the wind turbine, but thus that the air-tight material of adjustable deflectors 16 blocked a way of promotion wind-airflow through that air the energytransforming channel which is deduced on repair at present and also that the choice of technological modes and sizes of selection of capacity in concrete channels 4 was provided. Adjustable deflectors 16 can be carried out as well from the separate metal plates shifted from each other on separate ring sites when in one extreme position metal plates gather in packages, and in the other extreme position - completely block a ring aperture between ring platforms 15. They can be carried out also as adjustable jalousie, rotary plates on the independent axes completely overlapping in horizontal position corresponding target apertures of turbines.

The sealing devices 17 fixed to ring platforms 15, provide overlapping ways for infiltration wind-airflow between them and rotating (or motionless in the certain time intervals) face surfaces of cases 2 of energy-differentiative bushes, in auxiliary working spaces 12.

If independent bearing of rotation 3, in case of powerful wind turbine, are established and in the top part of cases 2 of energy-differentiative bushes the condensing devices 17 are carried out in a binding to a design of bearing of rotation. Condensing devices both in the entrance, and in the outlet cavities off air energytransforming channels are created mainly with application of technological "locks" at which in rotating details deep enough ring ductules - flutes inside of which enter on free landing pad - ring ledges on motionless details of interfaced designs are carried out. Mainly, flutes settle down from below.

External surfaces of cases 2 of energy-differentiative bushes are covered by the bandage ropes 18 fixing with a prestressing of their design.

Inside cases 2 of energy-differentiative bushes pass the mortgage products 19 executed as metal plates, rods or ropes by means of which the cases of energy-differentiative bushes are additionally strengthened and their rigid mechanical connection with mobile surfaces of sliding of independent bearing of rotation 3 is provided.

Multipurpose screw connections 10 of the wind turbine fix among themselves strengthening radial and bandage ropes 11, 18 and mortgage products 19 in combined prestressed design which perceives on itself action as a whole of all system of axial, radial and tangential forces, guaranteeing the durability and light durability, light and stability of work of the wing turbine as a whole at high linear speeds of rotation of surfaces of energy-differentiative bushes. Angular speeds of rotation of the last are various and accrue with reduction of distance of surfaces separate, in pairs connected blades, of energy-differentiative bushes from an axis of rotation 1. It concerns not only to independent, concentrically to the located turbines, but also to parameters of independent power channels of each of them.

In the present variant of realization of the invention to cases of energy-differentiative bushes 2mobile surfaces of sliding of the independent bearings rotations executed by means of ring-like saddles 20 (or the same - face flanges of cases 2) with the advanced horizontal shelfs 21 and the bases 22 are rigidly fixed in the bottom face part. Their surfaces, and also vertical cylindrical surfaces to which cinematically jointed motionless bearing elements of sliding 23, should be processed with high accuracy and cleanliness according to requirements to manufacturing large-sized bearings of sliding. More effective way of manufacturing of the specified saddle structure is his composition from the bottom, lateral and top components.

The components of saddles 20 forming further, in gathering, a precision saddle ring, have small length with strictly designed by a structure, surfaces of a joint and are processed on the precision program equipment. During the process of installation of the wind turbine on a workplace they are joined among themselves, for example, by means of the pin connections executed, in particular, from below in vertical the flange ends of horizontal shelves 21 each from components of saddles 20, and also are in addition fastened by a glutinous material. Balancing, polishing, grinding are carried out on a design workplace of the wind turbine after its full assembly.

Bearing elements of 23 bearing of rotation 3 are located in such a manner that fix position of cases 2 of energy-differentiative bushes in axial and radial directions. On Figs. 1 design of bearing of rotation is submitted schematically, its standard elements are not shown, including collections of lubricants and other integral constructive elements. The equipment for consecutive promotion, balancing, and grinding of constructive elements of the wind turbine is not shown also.

The independent bearing is executed by means of magnetic stabilizers and regulators of position of cases of energy-differentiative bushes, on the schematical representation are similar above-stated.

On surfaces of cases of energy-differentiative bushes 2, free from blades 9 and elements of independent bearings of rotation 3, constant magnets 24 are fixed as energy-initiating elements of electrogenerating ring-like sections and motionless electric coils 25 which with are fixed on ring platforms 13. For maintenance of convenience and quality of operational service of independent bearings of rotation and ring-like electrogenerating sections, the last are structurally shifted in an axial direction. All electrogenerating sections irrespective of to what from wind turbine they concern, in aggregate make distributed in space uniform the electrogenerating device - analogue on outlet electric parameters to the standard electrogenerator jointed in traditional designs by means of a shaft, socket (and it is possible, a reducer) with shaft standard of wind turbines. Difference in the technical decision, according to the prospective invention, consists that selection of capacity of airflow and transformation of arising mechanical capacity in electric is made by contactless way and in the places as much as possible approached to sites where there is a transformation of energy of an air high-speed flow to energy mechanical. From here other constructive-technological features distributed in space of the wind turbine and the electrogenerating devices providing increase of resulting efficiency, decrease in their specific cost, increase of reliability and maintainability already follow.

Schematical arrangement of the electrogenerating sections on figs. 1 is shown relative, for explanations. Actually the bottom end face of aerodynamic blades roughly coincides with the bottom plane of the face ends of energy-differentiative bushes, on conditions of maintenance of the set corner of attack of airflow on aerodynamic rotating surfaces of blades. The bottom face ends of blades in a horizontal plane can be carried out, in particular, with application of the high-strength aerodynamic beams specially established between corresponding energy-differentiative bushes in radial directions. Between aerodynamic beams, or other horizontal face terminations, fixing adaptations of blades, under the set corner to a surface of the blades, close to 90 °, passes a high-speed airflow which leaves from aerodynamic jets under the generated corner of attack, the finishing channel being a terminal part (the concentrated natural wind from airdirecting spaces or a high-dynamic thermo-air flow from heliotransforming spaces). Each of two finishing channels can come to the end not only with one jet output, but several - according to number of air energytransforming channels 4 of the wind turbine and the auxiliary working spaces 12 located between them. In the last really is settled down the sections of electrogenerating ring, having the structural representation which is shown on figs. 1. From the finishing channel on an input of the wind turbine the high-speed airflow (5,6) should not get in auxiliary working space 12 or in an environment. With this purpose application structurally technological "lock" which represents overlapping the ends of everyone jet and pad-ring ledges on the peripheral ends of air-inlet flanges which structure similarly to spokes, in particular, includes aerodynamic beams or the amplified horizontal face ends of blades is provided.

As the sizes of wind insulated working spaces 12 of the windturbine are significant, in them constructive elements of independent bearings of rotation and electrogenerating sections with maintenance of a necessary zone of service can place in common. Access in spaces 12 is carried out by means of apertures in ring platforms which on each side are joined with conic, pyramidal by surfaces (with the general vertical axis). On the resulted illustrations the described designs are not shown.

On Figs. 1 it is shown, that the entrance cavity 26 of the wind turbine contains a number of deflectors, as adjustable by the electric drives connected through the control devices with the computer control center (on figures it is not shown), as and controlled deflectors 16. All deflectors can have the similar design described with reference to controlled deflectors 16.

Automatic deflectors 27, controllers of an input windflow, and 28, comtrollers of an input of energy-saturated airflow from sections of heliotransforming spaces, on the arrangement are relative shown on Fig. 1, it is more evident they are submitted on Fig. 7. The task for deflectors 27, 28 consists in a choice of modes of interaction of heliotransforming and winddirecting spaces in view of their actual (moment) values power saturations of their energy potentials, technological maintenance of repair work etc., including at constructive overlapping of some sites of both spaces.

Automatically controlled deflectors 29 can be applied to regulation of overflows of energy of a working-medium within the limits of an entrance cavity 26 of the wind turbine, recognizing that at nominal power of windflows and airflows they appear by means of deflectors 29 isolated among themselves, and incorporate only in an internal cavity 7 of a chimney.

However, can be and intermediate modes. Separate design decisions can contain the connection of wind-inlet channels above thermo-air wind turbine.

Can be applied also deflectors 30 which have auxiliary purpose - for maintenance of conditions of carrying out of repair-preventive works. In that case deflectors 30 are structurally fixed concerning ring bearing platforms 13, by means of sliding fixing adaptations. Between the ring platforms dividing high-speed airflows between air energytransforming spaces, the transitions which aerodynamically have been made out above airflows which allow to pass to the attendants to auxiliary spaces 12 are carried out. For supervision and carrying out it is repair - preventive works in the last, in ring platforms observation ports, doorways, ladders and adaptations for accommodation of auxiliary improvised repair means are executed. The top ring platforms fasten with the help of basic designs 14.

In case of usage of the deflectors 29, they also are fixed concerning bearing designs 14, their position on Figs. 1 it is specified relative.

On Fig 2 the statement of constructive configuration of the (both wind turbines) goes deep. Here the energy-differentiative bushes 31 are represented to projections by four compound concentric rings collected from marked constructive modules of 32 their cases 2 (on Fig. 2 on one of such modules in structure of cases 2 everyone of energy-differentiative bushes id shaded in a projection). Between energy-differentiative bushes 31 are formed air energy-transforming channels 4 and wind-insulated working spaces 12 of the wind turbine. In channels 4 between corresponding surfaces of energy-differentiative bushes 31 blades 9 are placed, across of which the bandage ropes 11 fixed by means of multipurpose screw connections 10 of the wind turbine are placed. Parts 33 in a projection represent top (from the side of a chimney) the ends of volumetric blades. On Figs. 2 beginning of schematically submitted blades 9 which is located in the bottom part of cases 2, is closed by the top end 33 of previous blades. By the view - it is submitted on Figs. 3 and in part on Figs 4: the blades 9 beginning below, by means of the light air-tight material 34 forming the volumetric aerodynamic form of the blade, come to the end above with a part 33 which horizontal projection closes the beginning of the subsequent blade. Bandage radial ropes 11 settle down on surfaces of a light air-tight material outside and inside of a volumetric cavity of the blade 9 (on Figs. 3 internal cavity of the blade is marked by horizontal stroke lines). Here it is shown, that at the process of laying of a light air-tight material 34 between surfaces of energy-differentiative bushes 31, with cases 2 (Figs. 1), it settles down between the pins 35 fixed concerning cases 2 of energy-differentiative bushes along spatial lines, blades 9 corresponding to an aerodynamic structure, and also their edges.

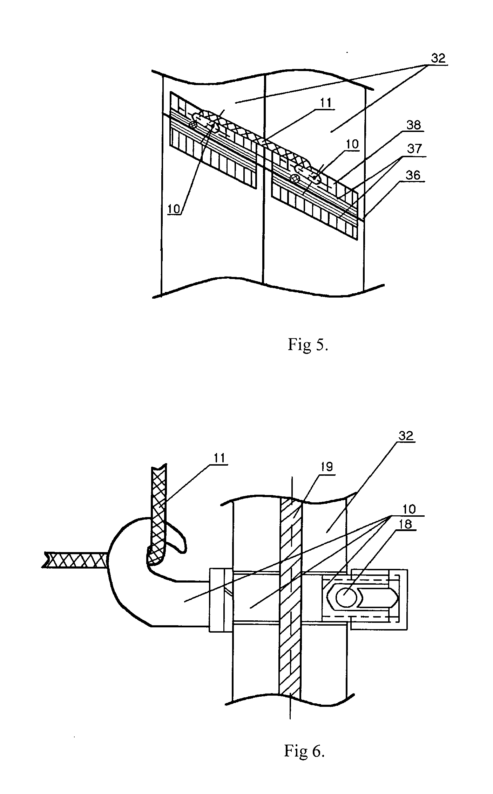

On figs 3-5 accommodation of an edge 36 of blades 9 by means of profile-making grooves, the flutes formed by corners 37, fixed by means of plates 38 connected by sites on the marked constructive modules 32 is shown. The specified auxiliary plates 38 are fixed concerning the marked constructive modules 32 of which cases 2 of energy-differentiative bushes 31 are made, by means of multipurpose screw connections or technological pins 10 of the windturbine. If the blade is formed of horizontal sections of the certain height - blocks, to which the kept form of concrete sites of an aerodynamic volumetric cavity and surfaces of blades is given, fixation of their edges 36 it is more comprehensible by means of pins 35 (Figs.), or in their combination with a directing structure from corners. If the aerodynamic surface of the blade is formed of a flexible sheet material, including at its volumetric design fixing of their edges 36 by means of the directing grooves formed by corners 37 is more preferable, shown on Figs. 5 (on Figs. 3 projection of section of the blade on - , designated in figures 34, coincides with an edge 36 easy air-tight material, the fractional designation 36/34) therefore is used. If sites of volumetric blades, which aerodynamic form it is approximately similar to the form of cross-section of a wing of the plane, are made of an light air-tight material in such a manner that these parts keep the form after manufacturing (even without loading) inside such blades strengthening radial ropes can not place, and only outside. In this case there can be expedient also a usage of not specified ropes, and bandage strips or their segment hoops with flat cross-section section.

On Figs. 4 it is shown collapsible fastening of edges 36 of volumetric aerodynamic blades concerning group adjacent; the marked constructive modules 32 of cases 2 of energy-differentiative bushes 31, including usage of sliding fixing landing in directing grooves.. The rope 11 located on the top structure of the blade, approaches to a surface of module I, does turn and places along a surface of modules I, II, III by means of multipurpose screw connections 10 (on Figs. 4 it is not shown), and on the constructive module III does similar turn by means of multipurpose screw connections 10 and goes perpendicularly to a surface of the module III in the opposite direction, along an external surface of the blade. And further process repeats, while all surface of the blade will not be fixed by parallel sites of bandage ropes with the certain step. In precisely the same way process is carried out concerning other profile sheet material of the volumetric blade (forming her a air-inlet surface) with turn of a strengthening radial rope 11 on multipurpose screw connections 10 of the wind turbine, fixed in constructive modules II and III.

On Figs. 4 the fragment of accommodation of the marked constructive modules 32 in a ring saddle 20 where surfaces of sliding 22 concerning which are executed is shown also: cinematically basic elements of 23 independent bearings of rotation are fixed, and apertures 39 in them - for connection of systems of submission of a lubricant working-medium under pressure are shown. Independent bearings can be based not only on a principle of liquid greasing of metal contact of sliding, but also on use of "pillow" of a lubricant working-medium - liquid or air "pillow" between bearing (sliding among themselves) elements of independent bearing of rotation.

On Fig. 6 the role of multipurpose screw connections 10 of the wind turbine which in the given variant of realization of the prospective invention connects among themselves strongly and with a prestessed rack (a body) marked constructive module 32, bandage ropes 11 both 18 and mortgage products 19 is submitted. With his help the main fixing units of the wind turbine and as a whole its bearing prestressing design are formed. In the given variant of screw connections 10 application of an additional surface in the form of a hook - for mobile capture and deduction of a bandage rope 11 is represented. There is a number of variants of fastening of a rope 11 concerning details of connection 10. Elastic elements in the last for maintenance of a tension of ropes at their some lengthening (deformation) while in service on Fig. 6 are not shown, as there is a number of variants of their fastening and prestressing, and the resulted design of the given unit is called to illustrate only an opportunity of realization of the offered main technical decisions.

On Fig. 7 accommodation of five extended in length sections 40 of heliotransforming spaces and five extended airconcentrating convergent tubes 41, forming in common winddirecting space which converge from periphery to an entrance cavity 26 of the wind turbine and is shown an internal cavity 7 of a chimney 8 (the projection of a chimney and the block of the wind turbine in the plan coincide, and they are designated by one figure).

It is necessary to note, that the wind turbine of natural windflow, covering outside, on diameter, the first wind turbine, can settle down and at the other level is higher than the first, the all final summation of an air flow in a chimney 8 remains.

The peripheral ends of airdirecting space have no stationary transparent heat-insulted covering, walls - they are free for a fence of a natural ground wind.

The peripheral ends of heliotransformibg spaces have an inclined light-transparent thermo-insulating covering 42. It is executed by means of formation a rope slings between a peripheral bearing rope 43 and the base bearings 44 with fastening on these slings of forms of the raised durability in which the transparent film material with a strengthening grid from strong strings is placed. This design is, in view of its inclined accommodation, steady up to speeds of a wind 40-50 m/s., and also can be strengthened till the speeds 60-70 m/s. At an opportunity of the big speeds of a wind this design can be strengthened by application of other materials. The specified amplification of wind-protecting does not demand application of special materials on all perimeter: it is enough to have his area in relative quantity of 25 % with system of sliding moving and the automated warehousing of a protective material (during the periods low-wind weathers).

The last concerns and for protection of a design of wind-directing space from destruction by especially powerful gale-force winds. In the given technical decision accommodation on his periphery of adaptations for fastening and automatic moving to a wind zone wind-reflecting surfaces is stipulated. Depending on speed of a natural wind position of a high-strength material on periphery wind-directing spaces is adjusted so that entrance speed of concentrated windflow in the turbine corresponded to the set constant value.

In wind-directing space 41 technological platforms 45 are shown by a dotted line where places the mobile, re-removable equipment of seasonal purpose. However, as position 45 is possible to understand accommodation of all technological infrastructure of a wind-directing space, including also the technological premises placed under inclined peripheral air-inlet aperture 46 where specified wind-controlled devices are placed. For example, on periphery, under inclined air-inlets 46 cattle-breeding farms with rather low coverings, with air-directing near-ground surfaces can be placed.

According to the prospective invention a helio-wind power plant works as follows.

Solar rays, acting through a transparent thermoinsulated covering in heliotransforming space 40, cause heating of air taking place there by means of dark helioabsorbent surfaces. The last represent the earth surfaces, cultivated agricultural plantations, water tables thermoinsulated ponds and water-thermo accumulators, the vertical and inclined helioabsorbent surfaces executed, for example, as adjustable jalousie, and also surfaces of the located in heliotransforming space exothermal equipment which on the submitted figures are not shown by virtue of clearness and multi-variant approach of execution. Besides solar rays show the action in heliotransforming space through submission in him of the working body heated up separately in the high-temperature hothouse complexes containing ray-directing surfaces, including adjustable on position.

Air from surrounding near-ground environments acts in heliotransforming space through controlled apertures in inclined peripheral walls 42 and-or through underground air channels. Getting additional heating, speed of vortical rotary movement and saturation in steam and microparticles of water in heliotransforming space, aerodynamic high-speed airflow acts in an entrance cavity 26 (see. Fig. 7,1) of the wind turbine 8, to be exact, the first-thermo-air wind turbine and further - in an internal cavity 7 of a chimney on to parallel air-outlet channels through adjustable deflectors 28 (simultaneously from five independent sections 40 of heliotransforming space). As speeds of the air power streams which are taking place through the wind turbine, are rather great, on surfaces of aerodynamic blades, mainly, are created holes which play the important role at interaction of air flows and blades. In particular, on accumulating surfaces of blades (the back parties of the last) are carried out the holes - deepenings in chessboard order by diameter about 10 and depth of 2-3 mm, that sharply reduces force of friction airflow due to occurrence in hole's area «vortical greasing». On face-to-face, air-inlet, "escaping" surfaces of blades creation of the raised force of friction airflow is necessary. This can be promoted by creation on them fields fine holes in diameter about 2mm and depth about 0,5mm, or ridge surfaces of close parameters that promotes occurrence useful in this case quasi-cavity processes, on the basis of hit in them of microparticles of water.

Together with it the near-ground natural wind acts in section-windconcentrating convergent tubes of the wind-directing space 41. Such sections, on Figs. 7 it is submitted also five, and they are formed by surfaces of lateral sides sections 40 of heliotransforming space, transparent thermo insulating ceilings, which on Fig. 7 in wind directing space 41 are marked by cross-section shading (relative representation of cross-section ropes, on which the transparent thermoinsulating covering of a wind ceilings is fixed), and also by near-ground air-directing surfaces.

In the wind-directing space 41 places also the exothermal equipment on processing waste products, for example, on processing and burning of household dust (in separate section), that on Figs. 7 it is shown relative (45). In wind directing spaces the wind ceiling also is in addition heated up, including by means of the solar rays penetrating through air ceiling, by means of heat-loses of heliotransforming spaces 40, thermal emissions of the other exothermal equipment.

The natural wind concentrates in wind-directing space 41, by the wind-directing surfaces, and acts through adjustable deflectors 27 in an internal cavity 26 of the wind turbine 8 (more precisely - in the wind turbine of natural windflow). At average for a year of speed of a natural wind 5-6 m/s., concentrated windflow, - at the area of a helio-wind power plant in 50 hectare, - reaches speed on an wind-inlet of the windflow in average for a year value 50-60 m/s (in view of a varying direction of a wind). In an internal cavity of 26 both wind turbines concentrated windflow and airflow from sections 40 of heliotransforming spaces are divided among themselves by adjustable deflectors 29 and incorporate in a parallel after passage of the wind turbine 8, it is possible to tell, incorporated wind turbine by means of an internal cavity 7 of a chimney. Modes of interaction and orientation in power channels 4 of both wind turbines 8 of windflow and heated up thermo-airflow 5 (Figs. 1) are adjusted by the computer control center by means of executive mechanisms - adjustable deflectors 27, 28, 29, 30 and 16.

The peripheral ends 46 of wind concentrating convergent tubes - the sections of air-directing spaces 41 are normally open on all width and height. They are formed by means of a inclined rope slings, fixed rather peripheral bearing ropes of 43 and base bearings 44 located on distance of 30-50 m from peripheral bearing ropes 43. On these inclined bearing ropes the bird-protecting grid is fixed also (on Fig 7 it is not shown) which is executed from high-strength strings. At amplification of a wind air-inlet apertures of wind-directing spaces in part decrease (at the help of means of hurricane-protection) that speed of the concentrated wind on an input in the wind turbine did not exceed 50-60 m/s or other design set size.

The wind-airflow formed as a result of functioning of heliotransforming and air -directing acts through an entrance cavity 26 of the incorporated wind turbine 8 in the independent air energytransforming channels 4 formed by cases 2 of energy-differentiative bushes 31 (Figs. 1,2).

The wind-airflow influences blades 9 of the wind turbine 8 by means of the entrance power parameters: speeds U and pressure . On aerodynamic surfaces of blades there are normal efforts which influences of the general pressure difference of an airflow grow out, his kinetic energy, and also the normal pressure enclosed to surfaces of blades because of distinction in modules of speeds V₁ and V₂¹, the blades caused by volumetric structures. On an output of the wind turbine, in internal cavity 7 of a chimney, the wind-airflow leaves with speed V₂¹¹, which has rotary and forward (tangential and axial) the components used further at control by technological processes in a chimney and on its output. With the purpose of formation united airflow in last one more step of constructive-technological integration of both wind turbines is carried out in one general complex by means of fact, that settlement corners of an inclination of surfaces of aerodynamic blades in them and in their air energytransforming channels 4 are formed. These corners in corresponding phase positions of blades (at rotation) are carried out identical or increasing to peripheral of energy-differentiative bushes. Effort to aerodynamic blades is created with the rotating moment and each pair of energy-differentiative bushes 31, between which blades 9 are fixed (in windenergy channels 4), starts to rotate. Adjacent pairs connected by blades 9 of energy-differentiative bushes31 have various angular speeds, but approximately identical, greatest possible at certain size U linear speeds of their surfaces that promotes the maximal increase of efficiency, decrease in the charge of active materials at designing and construction of the wind turbines and electrogenerating sections.

The moment and speed of rotation of the energy-differentiative bushes, arisen through influence of a windenergy flow on aerodynamic blades 9, leads to linear moving of magnetic systems - rotating energy-differentiative bushes 24 concerning their motionless reciprocal energy-differentiative bushes - electric coils with magnetic conductors 25 therefore in electric coils there is a electromotive force. At short circuit of power electric circuits through controlled semi-conductor devices, there is an electric current, and the electrogenerating sections, distributed in space, transfer corresponding capacity to external consumers. Besides the part of electric energy goes for auxiliary of a helio-wind power plant which basic capacity is spent in water-thermoaccumulating devices and other constructions. In water-thermoaccumulators, in case of use of sea water, there is an extraction in industrial volumes of useful impurity from sea water and her desalination, clearing by the cheapest way.

Blades of the wind turbine 9 get the settlement aerodynamic form at their installation by means of pins of 35 or directing grooves executed by means of rods 38 and in parallel located corners 37, fixed is relative marked constructive modules 32 of which cases 2 of energy-differentiative bushes 31 are made, fixed by bandage ropes 18 and mortgage products 19, for example, steel rope couplers (Fig. 1-6). On Figs 2 accommodation of air energytransforming channels 4, of windinsulated spaces 12 of the wind turbine in the plan is shown. In a horizontal projection of volumetric blades 9 the bandage ropes 11 fixing an aerodynamic structure of blades, multipurpose screw connections 10 and an internal cavity 33 (it is marked by horizontal shading) volumetric blades 9 are visible. And the beginning of each blade below the wind turbine is closed by a horizontal projection of an internal cavity 33 previous blades which is formed by two profile making surfaces of it.

The scheme of accommodation multipurpose screw connections of the wind turbine on the marked constructive module of the energy-differentiative bushes, their role in all design of the wind turbine as the devices, connecting in strong mechanical unit bandage ropes 11 both 18 and strengthening mortgage products 19, is clear from Fig.6 and previous descriptions.

The submitted illustrative materials, the description of designs and functioning of a helio-wind power plant according to present invention, together with a statement of the claims of the invention, show, that under the offered interconnected technical decisions the created complex is easily mounted from the marked components of factory manufacturing, is convenient in operation, has multiplane technological functions, including power manufacture, agroindustrial highly effective technologies and means system, in industrial volumes, improvements of an environment. Specific expenses for construction of such complex as it is possible to understand from stated, much below, than at construction of thermal power station, a state district power station and the atomic power station of similar capacity, and operational expenses - are repeatedly lower in connection with absence of necessity for purchase of expensive energy carriers.

The offered complex (a helio-wind power plant) has advantages before known technical decisions and before traditional systems of energy-producing at realization even one item 1 of the claims of the invention, however his efficiency grows at simultaneous use still several dependent items of the claims of the invention.

### Brief description of drawings

The example of realization of a helio-wind power plant according to the prospective invention is resulted below by means of Figs. 1-7 where the main constructive-technological decisions causing working capacity of a plant are submitted.
On Figs. 1 is presented the scheme of formation of wind-energy channels which are predetermined special by a design of the wind-turbine, and also electrogenerating devices.
On Figs. 2 is presented the of sector the wind-turbine in the plan, explaining distinctive features of it.
On Figs. 3 is presented the variant of an arrangement of wind-turbine blades, executed like a cross-section of a wing of the plane.
On Figs. 4 is presented the fragment of a design of the case energy-differentiative bush which in aggregate with similar to it is a base component of a wind turbine
On Figs. 5 is shown the fragment of fixing of the wind-turbine blade.
On Figs. 6 is shown the scheme of accommodation multipurpose fixing (screw) connections of the wind turbine, and also its basic constructive elements as binding technological unit of the wind-turbine.
On Figs. 7 is shown the scheme of configuration of heliotransforming and airdirecting spaces of a helio-wind power plant.

## Claims

1. A Helio-wind power plant containing helio-transforming space, formed helio-absorbing surfaces and their mainly transparent thermo insulation a covering, territories of the agrarian, trade and industrial purpose, closed heated up with the transformed solar energy thermal air environment with the controlled air inlets and air directing systems, special technological means, including thermo accumulating, thermo generating and evaporating installations and constructions, thermodynamic and aerodynamic devices for formation energy-saturated airflows, a air chimney and a controlled superstructure to it with adjustable on its height a wind-influenced surface, the air directing space including radial focused on a air outlet chimney of a surface, fixed concerning bearing support and applied as concentrators of a natural wind, additional aerodynamic means with which help both specified thermo-air and wind channels are connected to a air outlet chimney, mainly, through two independent wind turbines, jointed with electric-power generative devices, and the managing computer center **characterized in that** wind turbine which entrance cavity is connected aerodynamically with wind-directing space, concentric covers wind turbine which entrance cavity is aerodynamically connected, mainly, with helio-transforming space in such a manner that they have the general central axis and in common technologically represent one wind turbine structurally distributed in space, consisting of the concentric components having the various entrance channels of energy-saturated airflows, thus such wind turbine is executed by means of, at least, two pairs concentric energy-differentiative bushes, established on the independent support of rotation, and the aerodynamic blades located between them which spatial structure is executed according to the form of a trajectory of movement energy-saturated airflows through them, and in them with the help of free surfaces from blades of energy-differentiative bushes magnetic activators the electrogenerating generated devices, connected through magnetic air backlashes with electrogenerating parts and them magnetic conductors, fixed on base in the created auxiliary working spaces which are placed outside energy-saturated airflows and air-insulated from them with the help of aerodynamic adaptations are fixed, thus cases of energy-differentiative bushes are executed from the facilitated designs, including compound, mainly cylindrical form on which external surfaces strengthening bandage ropes are fixed with a prestressing, and aerodynamic blades of wind turbine, located between adjacent energy-differentiative bushes, are fixed to the last from both parties by means of technological demountable connections, in particular screw, thus air chimney with a controlled superstructure to it is applied with the help of additional aerodynamic devices as the integrator fulfilled in wind turbines energy-saturated airflows, and also airflows from an external environment which proceed at a level and lengthways a traction pipe and a controlled superstructure, and inside last gauges of parameters integrated airflow, connected to the managing computer center are placed on the fixed coordinates.

2. A Helio-wind power plant as claimed in claim 1 **characterized in that** cases of energy-differentiative bushes are executed with application of light metal cylinders, for example, from aluminium alloys and the titan which external surfaces are supplied with the strengthening bandage ropes fixed, in particular, by means of named technological demountable connections to aerodynamic blades.

3. A Helio-wind power plant as claimed in claim 1 **characterized in that**, at least, the part of cases of energy-differentiative bushes is executed in a modular design with application of the marked assembly modules of a vertical arrangement, in particular, easy metal structures which completely form the corresponding case of energy-differentiative bush, and they are combined by the adjacent lateral surfaces and form with the help of bandage ropes, aerodynamic blades and technological demountable connections of wind turbine, high-strength and light prestressed single construction.

4. A Helio-wind power plant as claimed in claim 1 **characterized in that** aerodynamic blades of wind turbines are executed compound, in particular from metal structures, and elements making them in common form a full structure of each of the aerodynamic blades, certain by their designed external surfaces.

5. A Helio-wind power plant as claimed in claim 1 **characterized in that** aerodynamic blades of wind turbine are executed by means of openwork volumetric designs on which the air-tight high-strength material is fixed, for example a glass film, thus the specified openwork designs contain metal and-or composit bearing elements, in particular black-reinforced plastic, containing elements for fastening technological demountable connections.

6. A Helio-wind power plant as claimed in claim 1 **characterized in that** aerodynamic blades of the turbine are executed from the sheet material which is taking place in mechanical contact to prestressed rods and-or ropes and surfaces of energy-differentiative bushes between which they are fixed.

7. A Helio-wind power plant as claimed in claim 1 **characterized in that** on surfaces of blades the field of aerodynamic deepenings is executed.

8. A Helio-wind power plant as claimed in claim 1 **characterized in that** as compound constructive modules of cases of energy-differentiative bushes vertically located structures from a composit material are applied, inside each of which strengthening mortgage products are placed.

9. A Helio-wind power plant as claimed in claim 1 **characterized in that** as compound constructive modules of cases of energy-differentiative bushes are applied is horizontal located rings and-or their share parts executed, for example, from a composit material.

10. A Helio-wind power plant as claimed in claim 1 **characterized in that** as components of cases of energy-differentiative bushes the modules executed by means of easy openwork designs, covered are applied by a thin and easy air-tight material, for example a high-strength film.

11. A Helio-wind power plant as claimed in claim 1 **characterized in that** wind turbines are supplied with independent gauges of parameters of the worked-out electric power which through the managing computer center are connected to regulators of technological modes of air-inlet and air-outlet systems.
